# EUROPEAN PATENT APPLICATION

(11) **EP 4 825 544 A1**
(43) Date of publication of application: **21.10.2026**
(21) Application number: 24903732.6
(22) Date of filing: 11.12.2024
(51) Int. Cl.: B25J 15/12, B25J 15/10, F15B 15/10

(54) **ACTUATOR ATTACHMENT STRUCTURE AND ROBOT HAND**

(30) Priority: 11.12.2023 JP 2023208783
(71) Applicant: BRIDGESTONE CORPORATION, Chuo-ku Tokyo 104-8340 (JP)
(72) Inventor: IWAMI, Nobuhiko, Tokyo 104-8340 (JP); MAEJIMA, Tatsuru, Tokyo 104-8340 (JP)
(74) Representative: Marks & Clerk LLP
(86) International application number: PCT/JP2024/043891
(87) International publication number: WO 2025/127079

(57) **Abstract**

An actuator mounting structure 19 includes plural fluid pressure actuators 20 each including an actuator main body 22 deformed into a curved by a pressure of a fluid supplied to an inside of the actuator main body, and a mounting portion 32 in which a flow path R through which a fluid is supplied from one end in a longitudinal direction of the actuator main body 22 to the inside of the actuator main body 22 is formed, and a housing 40 having a space to which a fluid is supplied inside the housing, and having plural mounted portions 60 corresponding to the mounting portion 32 of the fluid pressure actuator 20 on an outer surface of the housing, the flow path R being connected to the space by mounting the mounting portion 32 to the mounted portion 60.

## Description

### Technical Field

The present disclosure relates to an actuator mounting structure and a robot hand.

### Background Art

Japanese Patent Application Laid-Open (JP-A) No. 2023-131052 discloses a robot hand including a fluid pressure actuator that is variable in a direction orthogonal to an axial direction, and a mounting base to which the fluid pressure actuator is mounted, in which the fluid pressure actuator is fixed at the mounting base to be inclined outward in a curving direction of the fluid pressure actuator in a state in which the pressure of the fluid is not applied.

### SUMMARY OF INVENTION

### Technical Problem

In the configuration described in JP-A No. 2023-131052, the timings at which the fluid pressure actuators mounted to the robot hand are deformed may be shifted between the fluid pressure actuators.

An object of the disclosure is to provide an actuator mounting structure and a robot hand in which timings at which a plurality of fluid pressure actuators are deformed are easily aligned.

### Solution to Problem

An actuator mounting structure of a first aspect includes: a plurality of fluid pressure actuators each including a main body deformed into a curved shape by a pressure of a fluid supplied to an inside of the main body, and a mounting portion in which a first flow path through which a fluid is supplied from one end in a longitudinal direction of the main body to the inside of the main body is formed; and a housing having a space to which a fluid is supplied inside the housing, and having a plurality of mounted portions corresponding to the mounting portion of the fluid pressure actuator on an outer surface of the housing, the first flow path being connected to the space by mounting the mounting portion to the mounted portion.

In the actuator mounting structure of this aspect, the mounting portion of the fluid pressure actuator is mounted to the mounted portion, whereby the first flow path and the space to which a fluid is supplied are connected. There are the mounted portions to which a plurality of fluid pressure actuators are mounted on the outer surface of the housing. Thus, according to the actuator mounting structure of this aspect, since the fluid is distributed in the space and supplied to the plurality of fluid pressure actuators, timings at which the plurality of fluid pressure actuators are deformed are easily aligned.

An actuator mounting structure of a second aspect is the actuator mounting structure according to the first aspect, in which in the fluid pressure actuator, the mounting portion is fixed to the mounted portion by a mounting tool in which a second flow path connecting the first flow path and the space is formed.

In the actuator mounting structure of this aspect, since the mounting tool in which a second flow path is formed is used, the first flow path and the space are connected via the second flow path in a state in which the mounting portion is mounted to the mounted portion by using the mounting tool. Thus, according to the actuator mounting structure of this aspect, the number of types of components is reduced as compared with a case in which the first flow path and the space are connected by a component other than the mounting tool.

An actuator mounting structure of a third aspect is the actuator mounting structure according to the first or second aspect, in which the plurality of mounted portions are all equidistant from a center of the space.

In the actuator mounting structure of this aspect, since each of the plurality of mounted portions is equidistant from the center of the space, the pressures of the fluids supplied from the space to the respective fluid pressure actuators are likely to be uniform. As a result, according to the actuator mounting structure of this aspect, timings at which the plurality of fluid pressure actuators are deformed are more easily aligned as compared with a case in which the plurality of mounted portions are at different distances from the center of the space.

An actuator mounting structure of a fourth aspect is the actuator mounting structure according to the third aspect, in which the housing has a central portion and a plurality of protruding portions radially protruding from the central portion, and the mounted portion is formed on each of the protruding portions.

In the actuator mounting structure of this aspect, since the plurality of mounted portions are formed on the protruding portions, the volume on the center side of the housing can be reduced. Thus, according to the actuator mounting structure of this aspect, the overall size of the housing can be reduced as compared with a case in which the housing does not have the protruding portion.

An actuator mounting structure of a fifth aspect is the actuator mounting structure according to the fourth aspect, in which free ends of the plurality of fluid pressure actuators on a side opposite to the one end are disposed to face each other, and the mounted portions are inclined to be separated from each other toward a side of the free end.

In the actuator mounting structure of this aspect, since the mounted portions are inclined to be separated from each other toward a side of the free end of the fluid pressure actuator, an interval between the free ends of the fluid pressure actuators is larger than the interval between one ends. Thus, according to the actuator mounting structure of this aspect, the size of an object to be gripped by the plurality of fluid pressure actuators can be increased as compared with a case in which the mounted portions are not inclined so as to be separated from each other toward the free end side.

A robot hand of a sixth aspect includes: the actuator mounting structure according to any one of the first to fifth aspects; and a supply portion through which a fluid is supplied to the space of the fluid pressure actuator.

According to the robot hand of this aspect, a robot hand in which timings at which the plurality of fluid pressure actuators are deformed are easily aligned is obtained. Advantageous Effects of Invention

According to the disclosure, there are provided an actuator mounting structure and a robot hand in which timings at which a plurality of fluid pressure actuators are deformed are easily aligned.

### BRIEF DESCRIPTION OF DRAWINGS

Fig. 1 is a view illustrating a configuration example of a transfer robot according to an embodiment.
Fig. 2 is a plan view of a fluid pressure actuator included in the transfer robot of the embodiment.
Fig. 3 is a cross-sectional view describing a state in which the fluid pressure actuator included in the transfer robot of the embodiment operates.
Fig. 4 is a plan view illustrating a first housing included in a robot hand of the transfer robot of the embodiment.
Fig. 5 is a front cross-sectional view illustrating the first housing included in the robot hand of the transfer robot of the embodiment as viewed from line 5A-5A in Fig. 4.
Fig. 6 is a plan view illustrating a second housing included in the robot hand of the transfer robot of the embodiment.
Fig. 7 is a front cross-sectional view illustrating the second housing included in the robot hand of the transfer robot of the embodiment as viewed from line 7A-7A in Fig. 6.
Fig. 8 is a component view of a mounting tool that mounts the fluid pressure actuator to the housing of the embodiment.
Fig. 9 is a front view illustrating the robot hand of the embodiment.

### DESCRIPTION OF EMBODIMENTS

Hereinafter, embodiments for realizing the technology of the disclosure will be described in detail with reference to the drawings.

The same reference numerals are applied throughout the drawings to configuration elements and processing serving the same operation and function, and redundant explanation thereof is sometimes omitted as appropriate. The disclosure is not limited to the following embodiments at all, and can be implemented with appropriate modifications within the scope of the object of the disclosure.

The "arrow X+ direction" and the "arrow X- direction" in the drawings are an example of an axial direction and an example of a longitudinal direction in the fluid pressure actuator. The "arrow Z+ direction" and the "arrow Z- direction" in the drawings are examples of directions in which the fluid pressure actuator is curved. The "arrow Y+ direction" and the "arrow Y- direction" in the drawings are examples of the width direction of the fluid pressure actuator.

The "arrow U+ direction" and the "arrow U- direction" in the drawings are horizontal directions of the transfer robot, and are examples of the right-left direction. The "arrow V+ direction" and the "arrow V- direction" in the drawings are horizontal directions of the transfer robot, and are examples of the front-rear direction. In the drawings, the "arrow W+ direction" is an example of the upward direction in the transfer robot, and the "arrow W- direction" is an example of the downward direction in the transfer robot.

In the following description, "one" refers to the "+" side of the arrow U, the arrow V, the arrow W, the arrow X, the arrow Y, and the arrow Z, and "the other" refers to the "-" side of the arrow U, the arrow V, the arrow W, the arrow X, the arrow Y, and the arrow Z. That is, in a case in which a right-left direction U, a front-rear direction V, an up-down direction W, an axial direction X, a width direction Y, and an arrangement direction Z are described without adding "one" or "the other", they may refer to both the "+" side and the "-" side.

### <Configuration>

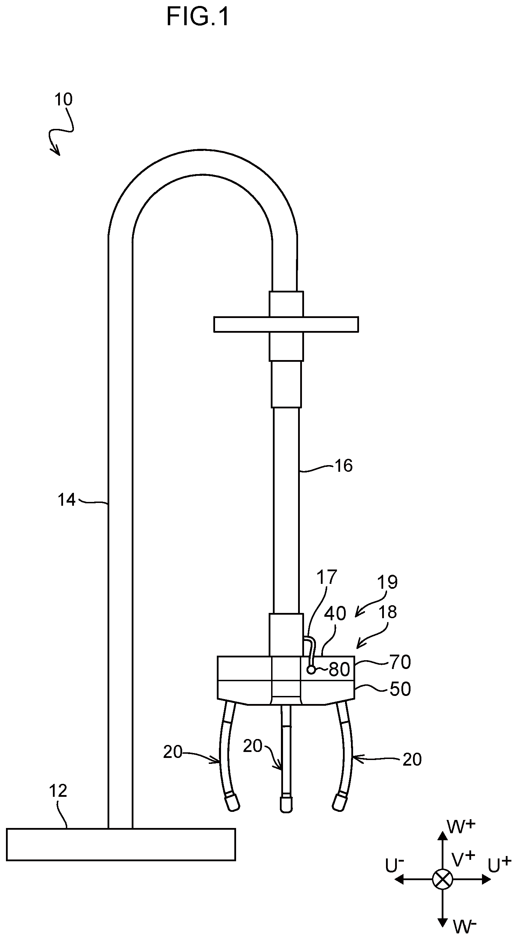

Fig. 1 illustrates an example of a transfer robot 10 using a robot hand 19 of this embodiment.

As illustrated in Fig. 1, the transfer robot 10 includes a rotatable pedestal portion 12, a support pole portion 14, an extendable arm portion 16, and the robot hand 19 as a hand portion (also referred to as a grip portion). In the transfer robot 10, the arm portion 16 extends and contracts, so that the robot hand 19 approaches or separates from a gripping target object. The arm portion 16 extends to grip the gripping target object with a plurality of fluid pressure actuators 20 of the robot hand 19, and the gripping target object is lifted by contracting the arm portion 16 in this state. Thereafter, the pedestal portion 12 is rotated to unload the gripping target object to another place. By using the transfer robot 10 in this manner, the gripping target object can be transferred.

The robot hand 19 includes a supply portion 17 and an actuator mounting structure 18. The actuator mounting structure 18 includes a plurality of fluid pressure actuators 20 and a housing 40 to which the fluid pressure actuators 20 are mounted.

As described later, the supply portion 17 is a component that supplies compressed air to an internal space 42 inside the housing 40, and is, for example, a hose to which compressed air is supplied from the inside of the support pole portion 14 and the arm portion 16. The supply portion 17 is controlled to supply and stop the compressed air by a control unit (not illustrated).

### (Fluid Pressure Actuator 20)

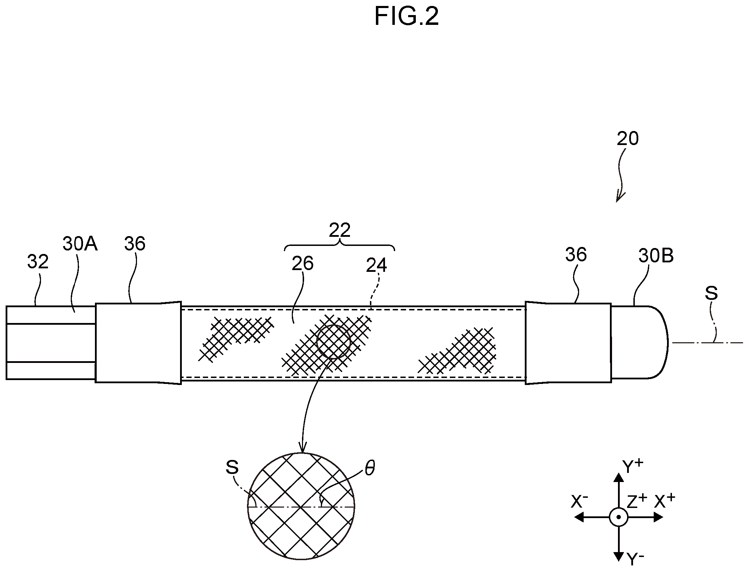

Fig. 2 illustrates the fluid pressure actuator 20 according to an embodiment of the disclosure. The fluid pressure actuator 20 includes an actuator main body 22, a first sealing member 30A, and a second sealing member 30B.

As also illustrated in Fig. 2, the actuator main body 22 has a tube 24, a sleeve 26, a restraining member 28, a locking ring 34, and a caulking member 36.

The tube 24 is an extendable cylindrical member by elastic deformation, and is expanded and contracted by a change in pressure of an internal fluid. In the assembled state of the fluid pressure actuator 20, the longitudinal direction of the tube 24 coincides with the axial direction X.

The tube 24 can be configured by an elastic material such as butyl rubber. Air can be used as the fluid to be supplied to the tube 24, and in this case, the fluid pressure actuator 20 is a pneumatic actuator. In a case in which the fluid pressure actuator 20 is hydraulically driven, it is preferable to use at least one selected from the group consisting of nitrile rubber (NBR) or hydrogenated NBR having high oil resistance, chloroprene rubber, and epichlorohydrin rubber.

The sleeve 26 is a cylindrical member that covers the outer periphery of the tube 24. The sleeve 26 is a stretchable structure in which a fiber cord oriented in a predetermined direction is woven, and the oriented cord intersects the axial direction X at a predetermined angle θ. With such a shape, the sleeve 26 undergoes pantograph deformation that changes the angle θ, and follows the contraction and expansion while restricting the contraction and expansion of the tube 24.

As the cord constituting the sleeve 26, a fiber cord of aromatic polyamide (aramid fiber) or polyethylene terephthalate (PET) is preferably used. However, the fiber cord is not limited to such types of fiber cords, and may be cords of other high-strength fibers such as poly p-phenylene benzobisoxazole (PBO) fibers.

The restraining member 28 has an elongated plate shape, is disposed such that the longitudinal direction thereof is along the axial direction X of the tube 24, and is disposed from one end to the other end of the tube 24 while being in contact with a part of the outer periphery of the tube 24.

The restraining member 28 is formed of a material that does not expand or contract by pressurization, and is bendable and deformable in a direction in which the end portions approach each other. As the restraining member 28, a so-called leaf spring can be used. The dimensions of the leaf spring are determined according to the size of the fluid pressure actuator 20, the required gripping force, and the like. The material of the leaf spring is not particularly limited, but typically, any material that is easily flexurally deformed and resistant to compression, such as a metal of stainless steel or the like, may be used. Alternatively, the leaf spring may be formed of a thin plate of carbon fiber reinforced plastic (CFRP) or the like.

The locking ring 34 is a ring-shaped member, is disposed outside the sleeve 26 so as to sandwich the sleeve 26 with a locking portion 38 described later, and locks the sleeve 26 to a mounting portion 32. As a result, the sleeve 26 is folded back to the outer periphery via the locking ring 34. For the locking ring 34, a material such as metal, hard plastic, fiber, or rubber can be used.

The caulking member 36 is crimped on the outer periphery of the actuator main body 22 so as to cover a portion in which an insertion portion 33A of the first sealing member 30A and an insertion portion 33B of the second sealing member 30B which are described later are inserted. As a result, the actuator main body 22 is fixed to the first sealing member 30A or the second sealing member 30B which is described later. As the caulking member 36, metal such as aluminum alloy, brass, and iron can be used.

The first sealing member 30A includes the mounting portion 32, the locking portion 38, a large diameter portion 39, and the insertion portion 33A. In the following description, a side on which the actuator main body 22 is located as viewed from the first sealing member 30A and the second sealing member 30B may be referred to as an inner side in the axial direction X.

The mounting portion 32 has a diameter larger than the outer diameter of the tube 24, and the locking portion 38, the large diameter portion 39, and the insertion portion 33A are formed to extend in the axial direction X from one end side of the mounting portion 32.

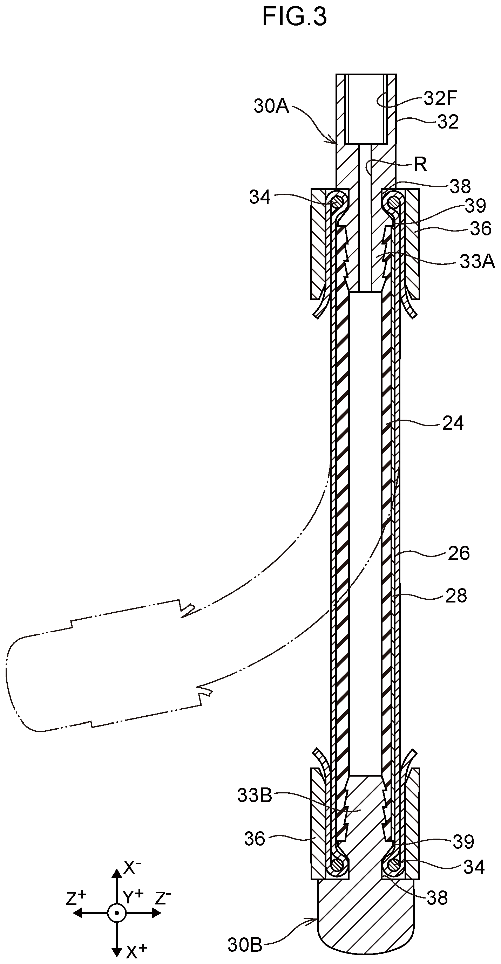

As illustrated in Fig. 3, a female screw 76 is provided on one end side (upper side in Fig. 3) of the mounting portion 32 in the axial direction X. The mounting portion 32 has a flow path R that passes through the radial central portion and communicates with the other end side (lower side in Fig. 3) of the insertion portion 33A in the axial direction X. A mounting tool 44 described later is connected to the female screw 76, and compressed air is supplied to the flow path R. That is, the flow path R is an example of the "first flow path" in this embodiment.

The locking portion 38 is a portion extending from the inner surface of the mounting portion 32 in the axial direction X toward the other side in the axial direction X, and has a smaller diameter than the mounting portion 32 as illustrated in Fig. 3. The length of the locking portion 38 in the axial direction X is appropriately set in accordance with the shape of the locking ring 34 described above.

The large diameter portion 39 is a portion extending from the surface on the other end side of the locking portion 38 toward the other side in the axial direction X, and has a larger diameter than the locking portion 38 as illustrated in Fig. 3. The length of the large diameter portion 39 in the axial direction X is appropriately set in accordance with the shape of the caulking member 36 described above.

As illustrated in Fig. 3, the insertion portion 33A is formed by connecting a plurality of tapered portions, which are tapered inward in the axial direction X, in the axial direction X and is inserted into one end side of the tube 24.

As the first sealing member 30A, a metal such as stainless steel can be suitably used, but the first sealing member is not limited to such a metal, and a hard plastic material or the like may be used.

The second sealing member 30B provided on the other end side (right side of the drawing in Fig. 2) in the axial direction X of the fluid pressure actuator 20 has the locking portion 38, the large diameter portion 39, and the insertion portion 33B. The second sealing member 30B is similar to the first sealing member 30A except that the flow path R is not formed in the insertion portion 33B and the distal end has an R shape unlike the first sealing member 30A.

Next, an assembly procedure of the fluid pressure actuator 20 in this embodiment will be described.

### <Assembly of Fluid Pressure Actuator 20>

First, the insertion portion 33A of the first sealing member 30A is inserted into the tube 24 until one end thereof abuts against the large diameter portion 39. The restraining member 28 is aligned with the insertion portion 33A along the tube 24.

Next, the outer peripheral surface of the restraining member 28 is covered while the sleeve 26 is hooked to the tube 24 and the locking portion 38 of the first sealing member 30A, and the sleeve 26 is locked to the locking portion 38 by mounting the locking ring 34 at the position of the locking portion 38 from the radially outer side of the sleeve 26.

Next, the sleeve 26 is folded back to the insertion portion 33A of the first sealing member 30A such that the locking ring 34 is on the inner side, and the caulking member 36 is disposed to extend from the radially outer side of the sleeve 26 to the insertion portion 33A and the locking portion 38, and is crimped by a crimping machine (not illustrated). As a result, the tube 24, the restraining member 28, and the sleeve 26 are fixed to the first sealing member 30A at one end in the axial direction X of the actuator main body 22.

The above procedure is similarly performed for the second sealing member 30B, and as illustrated in Fig. 3, the tube 24, the restraining member 28, and the sleeve 26 are fixed to the second sealing member 30B at the other end in the axial direction X of the actuator main body 22.

### <Operation of Fluid Pressure Actuator 20>

As illustrated in Fig. 3, the fluid pressure actuator 20 is used such that the first sealing member 30A is fixed to a fixing portion (not illustrated) such as the actuator mounting structure 18 and the second sealing member 30B is a free end.

First, in a case in which compressed air flows into the flow path of the first sealing member 30A, the pressure in the tube 24 of the actuator main body 22 increases. The tube 24 is elastically deformed and expanded due to an increase in the internal pressure, the sleeve 26 is pantograph deformed so as to increase the angle θ, and a force acts on the actuator main body 22 in a direction in which the length is shortened.

At this time, since the shortening is restricted by the restraining member 28, the outer peripheral wall of the actuator main body 22 on a side opposite to the restraining member 28 (left side in Fig. 3) is shortened as viewed in the axial direction X. As a result, the restraining member 28 is flexurally deformed, and the entire actuator main body 22 is curved toward the left side in the drawing as indicated by a two-dot chain line in Fig. 3. That is, the actuator main body 22 is an example of the "main body" in this embodiment.

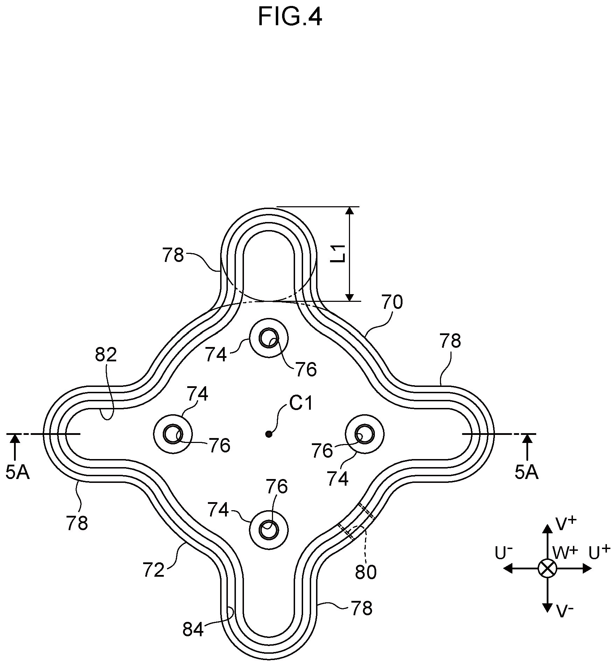

In the transfer robot 10 in this embodiment, as illustrated in Fig. 1, the plurality of fluid pressure actuators 20 are mounted to the housing 40. The housing 40 and the actuator mounting structure 18 will be described with reference to Figs. 4 to 7.

### (Housing 40)

As illustrated in Fig. 1, the housing 40 is divided into a first housing 70 and a second housing 50.

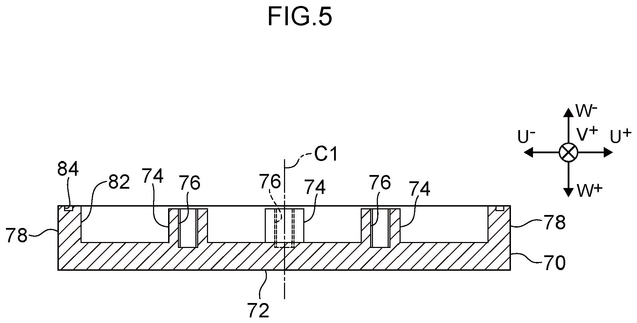

As illustrated in Figs. 4 and 5, the first housing 70 has a disk portion 72 expanding in a circular shape in the horizontal direction (the right-left direction U and the front-rear direction V), a total of four protruding portions 78 protruding from the disk portion 72 in the respective directions of the right-left direction U and the front-rear direction V, and a side wall 82. In other words, the protruding portions 78 protrude in four directions from the disk portion 72 in plan view.

The disk portion 72 has a total of four protrusions 74 protruding upward (arrow W+ side) concentrically from a center C1 as viewed in the up-down direction W. In the protrusion 74, the female screw 76 is formed at the center of the protrusion 74 as viewed in the up-down direction W. As illustrated in Fig. 5, the protruding size (size in the up-down direction W) of the protrusion 74 is smaller than the height of the side wall 82.

As illustrated in Figs. 4 and 5, the protruding portion 78 has a thickness similar to that of the disk portion 72. The width of the protruding portion 78 (the length in the direction in which each protruding portion 78 protrudes and the length in the direction orthogonal to the up-down direction W) is, for example, equal to a protruding length L1 of the protruding portion 78 protruding from the disk portion 72. In other words, the width and the protruding length of the protruding portion 78 are equal to each other. As illustrated in Fig. 4, the distal end side (the side farther from the center C1 of the disk portion 72) from which the protruding portion 78 protrudes as viewed in the up-down direction W is rounded into an R shape having a radius of half the protruding portion 78.

As illustrated in Fig. 4, the side wall 82 is formed so as to surround the periphery of the disk portion 72 and the protruding portion 78 described above and rise in the up-down direction W. In other words, the first housing 70 has a vessel-like shape as a whole by the disk portion 72, the protruding portion 78, and the side wall 82. The side wall 82 has a supply hole 80 at a position surrounding the disk portion 72. The supply portion 17 which is a hose is mounted to the supply hole 80 (see also Fig. 1), and compressed air flows into the side wall 82 through the supply hole 80.

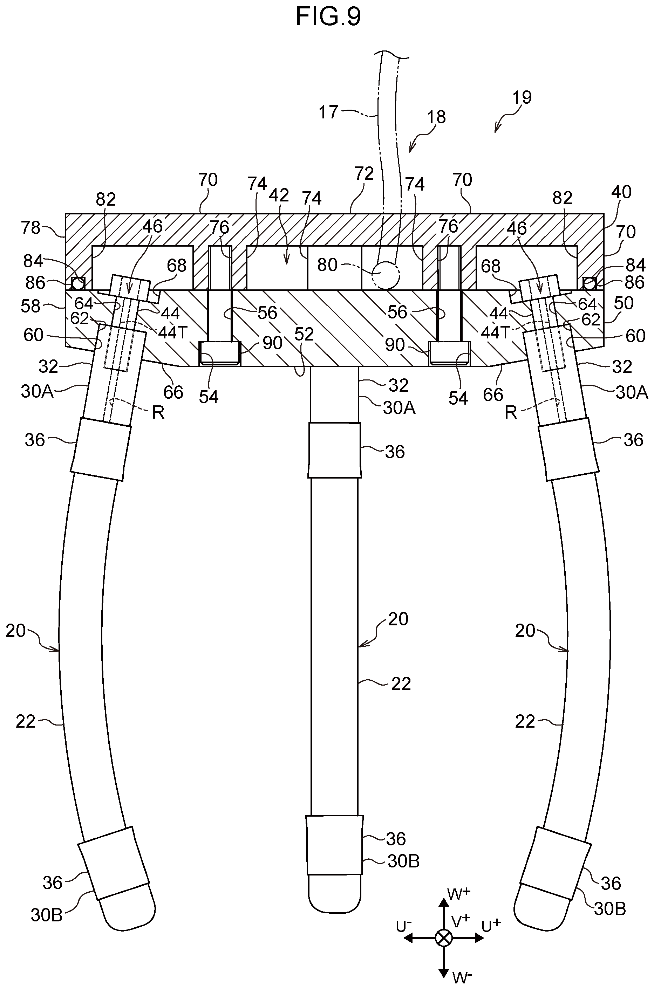

As illustrated in Figs. 4 and 5, the side wall 82 has a groove 84 on the lower surface (surface on the arrow W- side). A gasket 86 is incorporated in the groove 84, and a gap between the second housing 50 and the side wall 82 is filled in a case in which the second housing 50 and the first housing 70 are overlapped as described later (see also Fig. 9).

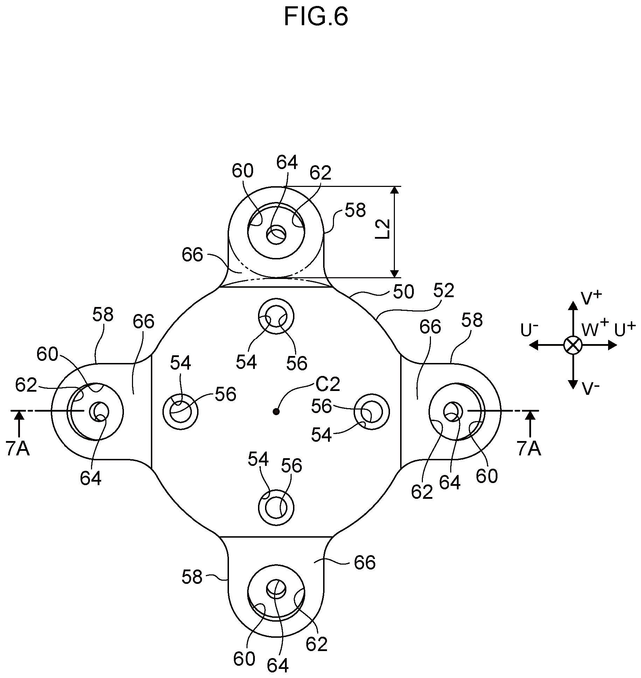

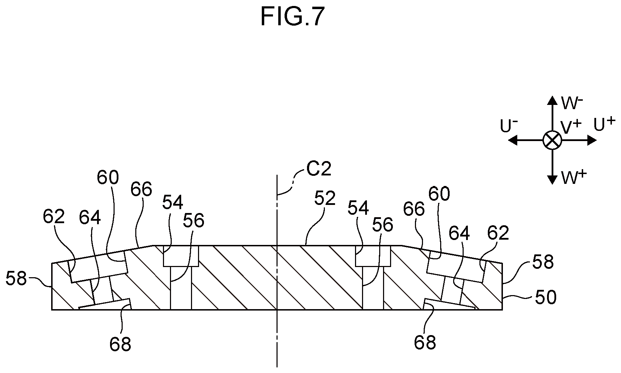

As illustrated in Figs. 6 and 7, the second housing 50 has a disk portion 52 expanding in a circular shape in the horizontal direction (the right-left direction U and the front-rear direction V), and a total of four protruding portions 58 protruding from the disk portion 52 in the respective directions of the right-left direction U and the front-rear direction V. In other words, the protruding portions 58 protrude in four directions from the disk portion 52 in plan view.

The disk portion 52 has a total of four recesses 54 recessed downward (arrow W- side) concentrically from a center C2 as viewed in the up-down direction W. In the recess 54, a through hole 56 is formed at the center of the recess 54 as viewed in the up-down direction W. The position of the recess 54 in the disk portion 52 of the second housing 50 corresponds to the position of the protrusion 74 in the disk portion 52 of the first housing 70. The diameter of the disk portion 52 of the second housing 50 is equal to the diameter of the disk portion 72 of the first housing 70.

The width of the protruding portion 58 of the second housing 50 (the length in the direction in which each protruding portion 58 protrudes and the length in the direction orthogonal to the up-down direction W) and a protruding length L2 of the protruding portion 58 protruding from the disk portion 52 are equal to the width and length of the protruding portion 78 of the first housing 70. As illustrated in Fig. 4, the distal end side from which the protruding portion 78 protrudes as viewed in the up-down direction W is rounded in an R shape having a radius that is half of the protruding portion 78.

That is, as viewed in the up-down direction W, the first housing 70 and the second housing 50 have the same contour.

As illustrated in Fig. 7, the lower surface (surface on the arrow W- side) of the protruding portion 58 of the second housing 50 has an inclined surface 66 inclined in a direction away from the center C2 (the right-left direction U or the front-rear direction V) and a mounted portion 60. As illustrated in Fig. 7, the protruding portion 58 of the second housing 50 has a counterbore hole 68 on the upper surface (surface on the arrow W+ side that is a surface on a side opposite to the mounted portion 60).

As described later, the mounted portion 60 is a portion to which the mounting portion 32 of the fluid pressure actuator 20 is mounted. As illustrated in Figs. 6 and 7, the mounted portion 60 has a recess 62 recessed in a direction orthogonal to the inclined surface 66 and a through hole 64 penetrating toward the opposite side of the inclined surface 66 at the center of the recess 62. In other words, since the mounted portion 60 is formed in a direction orthogonal to the inclined surface 66, each of the mounted portions 60 is inclined such that the central axes are separated from each other. In other words, in a case in which the fluid pressure actuator 20 is mounted as described later, the mounted portions 60 are inclined so as to be separated from each other toward the second sealing member 30B. The diameter of the recess 62 in the mounted portion 60 is slightly larger than the diameter of the mounting portion 32 in the fluid pressure actuator 20. The diameter of the through hole 64 is larger than the nominal diameter of the female screw 76 of the mounting portion 32.

As illustrated in Fig. 7, the counterbore hole 68 is a recess recessed in the inclined surface 66 in a direction orthogonal to a direction in which the inclined surface 66 is inclined, and is a portion where the through hole 56 of the mounted portion 60 is formed. The diameter of the counterbore hole 68 is larger than the diameter of the head portion of the mounting tool 44 described later.

### (Mounting Tool 44)

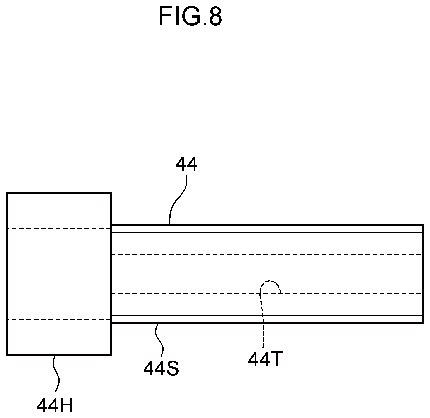

Fig. 8 is a view illustrating the mounting tool 44 that mounts the fluid pressure actuator 20 to the mounted portion 60 in the actuator mounting structure 18 in this embodiment. The mounting tool 44 in this embodiment is a bolt with a hexagonal hole, the bolt having a head portion 44H into which a hexagonal wrench can be inserted, a male screw portion 44S having a diameter smaller than that of the head portion 44H and extending from the head portion 44H, and a through hole 44T penetrating the head portion 44H and the male screw portion 44S. The nominal diameter of the male screw portion 44S in the mounting tool 44 coincides with the nominal diameter of the female screw 76 of the mounting portion 32.

Next, an assembly procedure of the actuator mounting structure 18 and the robot hand 19 according to this embodiment will be described with reference to Fig. 9.

### <Assembly Procedure of Actuator Mounting Structure 18 and Robot Hand 19>

First, in the assembly procedure of the actuator mounting structure 18 in this embodiment, the fluid pressure actuator 20 is mounted to the mounted portion 60 of the second housing 50 using the mounting tool 44 as illustrated in Fig. 9.

In the actuator mounting structure 18 in this embodiment, as described above, the recess 62 and the through hole 56 in the mounted portion 60 are inclined with respect to the up-down direction W. Therefore, in the actuator mounting structure 18 in this embodiment, as illustrated in Fig. 9, the fluid pressure actuator 20 is fixed in a state in which the mounting portion 32 is inclined with respect to the up-down direction W.

Next, in the assembly procedure of the actuator mounting structure 18 in this embodiment, the second housing 50 and the first housing 70 are overlapped and fixed. More specifically, as illustrated in Fig. 9, the male screw of the mounting tool 90 inserted into the recess 54 of the second housing 50 passes through the through hole 56 of the second housing 50, and is screwed into the female screw 76 of the protrusion 74 of the first housing 70, whereby the second housing 50 and the first housing 70 are overlapped with each other.

As illustrated in Fig. 9, in a state in which the second housing 50 and the first housing 70 are overlapped and fixed, the internal space 42 is formed by the second housing 50 and the first housing 70. As described above, the compressed air is supplied to the internal space 42 from the supply hole 80 of the side wall 82 of the first housing 70 illustrated in Fig. 4. That is, the internal space 42 is an example of the "space to which a fluid is supplied" in this embodiment. As illustrated in Fig. 9, a portion where the disk portion 52 of the second housing 50 and the disk portion 72 of the first housing 70 face each other is an example of the "central portion" in this embodiment. As illustrated in Fig. 9, a portion where the protruding portion 58 of the second housing 50 and the protruding portion 78 of the first housing 70 face each other protrudes radially from the central portion.

As illustrated in Fig. 9, the flow path R of the mounting portion 32 of the fluid pressure actuator 20 is connected to the counterbore hole 68 of the second housing 50 by the through hole 44T of the mounting tool 44. That is, the through hole 44T of the mounting tool 44 is an example of the "second flow path" in this embodiment.

As illustrated in Fig. 9, the mounted portions 60 of the second housing 50 are all equidistant from the center of the internal space 42. It can be said that the mounted portion 60 is inclined such that the second sealing member 30B side of the fluid pressure actuator 20 is away from the center of the internal space 42. In other words, the side of the first sealing member 30A of the fluid pressure actuator 20 is an example of "one end" in this embodiment, and the side of the second sealing member 30B is an example of "free end" in this embodiment.

Then, as illustrated in Fig. 1, the supply portion 17 is mounted to the supply hole 80 in a state in which the actuator mounting structure 18 is mounted to the distal end of the arm portion 16. As a result, the actuator mounting structure 18 functions as the robot hand 19 at the distal end of the arm portion 16.

Next, operations and effects of this embodiment will be described.

### (Operations and Effects)

In the actuator mounting structure 18 in this embodiment, the mounting portion 32 of the fluid pressure actuator 20 is mounted to the mounted portion 60, whereby the flow path R and the internal space 42 to which a fluid is supplied are connected. There are the mounted portions 60 to which the plurality of fluid pressure actuators 20 are mounted on the outer surface of the housing 40. Thus, according to the actuator mounting structure 18 of this embodiment, since the fluid is distributed in the internal space 42 and supplied to the plurality of fluid pressure actuators 20, timings at which the plurality of fluid pressure actuators 20 are deformed are easily aligned.

In the actuator mounting structure 18 in this embodiment, since the mounting tool 44 in which the through hole 44T is formed is used, the flow path R and the internal space 42 are connected via the through hole 44T in a state in which the mounting portion 32 is mounted to the mounted portion 60 by using the mounting tool 44. Thus, according to the actuator mounting structure 18 of this embodiment, the number of types of components is reduced as compared with a case in which the flow path R and the internal space 42 are connected by a component other than the mounting tool 44.

In the actuator mounting structure 18 in this embodiment, since each of the plurality of mounted portions 60 is equidistant from the center of the internal space 42, the pressures of the fluids supplied from the internal space 42 to the respective fluid pressure actuators 20 are likely to be uniform. As a result, according to the actuator mounting structure 18 of this embodiment, timings at which the plurality of fluid pressure actuators 20 are deformed are more easily aligned as compared with a case in which the plurality of mounted portions 60 are at different distances from the center of the internal space 42.

In the actuator mounting structure 18 in this embodiment, the plurality of mounted portions 60 are formed in the protruding portions 58 protruding from the disk portion 52. Therefore, in a case in which the outer diameters of the disk portion 52 and the disk portion 72 are equal to those of the housing 40, in other words, as compared with a case in which the housing 40 does not have the protruding portion 58 and the protruding portion 78, the overall size of the housing 40 can be reduced.

In the actuator mounting structure 18 in this embodiment, since the mounted portions 60 are inclined to be separated from each other toward the second sealing member 30B side of the fluid pressure actuator 20, an interval between the second sealing members 30B is larger than the interval between the first sealing members 30A. In other words, the fluid pressure actuator 20 according to this embodiment extends downward while expanding in the horizontal direction. As a result, according to the actuator mounting structure 18 of this embodiment, it is possible to grip a larger object as compared with a case in which the mounted portion 60 is not inclined to be separated toward the second sealing member 30B side of the fluid pressure actuator 20.

In the robot hand 19 in this embodiment, timings at which the plurality of fluid pressure actuators 20 are deformed are easily aligned.

### [Modification]

In the above description, the mounted portion 60 is inclined so as to be separated toward the second sealing member 30B side of the fluid pressure actuator 20, but the actuator mounting structure 18 in this embodiment is not limited thereto. For example, the protruding portion 58 of the second housing 50 may not have the inclined surface 66, and the mounted portion 60 may be formed without being inclined with respect to the disk portion 52 (along the up-down direction W).

In the above description, the mounted portion 60 is formed in the protruding portion 58 protruding from the disk portion 52, but the actuator mounting structure 18 in this embodiment is not limited thereto. For example, the housing 40 may not include the protruding portion 58 of the first housing 70 and the protruding portion 58 of the second housing 50, and the mounted portion 60 may be formed on the disk portion 52.

In the above description, the mounted portion 60 is formed at an equal distance from the center of the internal space 42, but the actuator mounting structure 18 in this embodiment is not limited thereto. For example, the mounted portion 60 may not be equidistant from the center of the internal space 42 as long as it is formed on the outer surface of the second housing 50.

In the above description, the fluid pressure actuator 20 is mounted to the mounted portion 60 using the mounting tool 44 having the through hole 44T, but the actuator mounting structure 18 in this embodiment is not limited thereto. For example, the outer periphery of the mounting portion 32 of the fluid pressure actuator 20 may be a male screw, and the mounted portion 60 may be the female screw 76, so that the fluid pressure actuator 20 may be mounted without using other members.

In the above description, the number of the fluid pressure actuators 20 and the number of the mounted portions 60 are four, respectively, but the actuator mounting structure 18 according to this embodiment is not limited thereto. For example, the number of the fluid pressure actuators 20 may be appropriately set according to the specification of the actuator mounting structure 18. The number of the protruding portions 58 of the second housing 50, the number of the protruding portions 58 of the first housing 70, and the number of the mounted portions 60 may be larger than the number of the fluid pressure actuators 20.

In the above description, the first housing 70 has the side wall 82, but the actuator mounting structure 18 in this embodiment is not limited thereto. For example, in a case in which the internal space 42 is formed such that the mounted portion 60 and the supply hole 80 are connected in a state in which the second housing 50 and the first housing 70 are overlapped and fixed, the configuration corresponding to the side wall 82 may be included in the second housing 50.

Also in these modifications, the configuration similar to that of this embodiment can obtain the same operations and effects as those of this embodiment.

Although the embodiments of the disclosure have been described above with reference to the accompanying drawings, it is obvious that a person having ordinary knowledge in the technical field to which the disclosure belongs can conceive various changes or application examples within the scope of the technical idea described in the claims, and it is naturally understood that these changes or application examples also belong to the technical scope of the disclosure.

The entire contents of the disclosures by Japanese Patent Application No. 2023-208783 filed on December 11, 2023 are incorporated herein by reference.

All the literature, patent application, and technical standards cited herein are also herein incorporated to the same extent as provided for specifically and severally with respect to an individual literature, patent application, and technical standard to the effect that the same should be so incorporated by reference.

## Claims

1. An actuator mounting structure comprising:
a plurality of fluid pressure actuators each including a main body that is deformed into a curved shape by a pressure of a fluid supplied to an inside of the main body, and a mounting portion in which a first flow path through which a fluid is supplied from one end in a longitudinal direction of the main body to the inside of the main body is formed; and
a housing having a space to which a fluid is supplied inside the housing, and having a plurality of mounted portions corresponding to the mounting portion of the fluid pressure actuator on an outer surface of the housing, the first flow path being connected to the space by mounting the mounting portion to the mounted portion.

2. The actuator mounting structure according to claim 1, wherein
in the fluid pressure actuator, the mounting portion is fixed to the mounted portion by a mounting tool in which a second flow path connecting the first flow path and the space is formed.

3. The actuator mounting structure according to claim 1, wherein
the plurality of mounted portions are all equidistant from a center of the space.

4. The actuator mounting structure according to claim 3, wherein
the housing has a central portion and a plurality of protruding portions radially protruding from the central portion, and
the mounted portion is formed on each of the protruding portions.

5. The actuator mounting structure according to claim 4, wherein
free ends of the plurality of fluid pressure actuators on a side opposite to the one end are disposed to face each other, and
the mounted portions are inclined to be separated from each other toward a side of the free end.

6. A robot hand comprising:
the actuator mounting structure according to any one of claims 1 to 5; and
a supply portion through which a fluid is supplied to the space of the fluid pressure actuator.
